# EUROPÄISCHE PATENTSCHRIFT

(11) **EP 0 779 452 B1**
(45) Veröffentlichungstag und Bekanntmachung des Hinweises auf die Patenterteilung: **06.02.2002**
(21) Anmeldenummer: 96118826.5
(22) Anmeldetag: 25.11.1996
(51) Int. Cl.: F16H 7/12

(54) **Riemenspannvorrichtung**
Belt tensioning device
Dispositif de tension de courroie

(30) Priorität: 12.12.1995 DE 19546207; 01.02.1996 DE 19603558
(43) Veröffentlichungstag der Anmeldung: 18.06.1997
(73) Patentinhaber: Firma Muhr und Bender, D-57439 Attendorn (DE)
(72) Erfinder: Berndt, Thomas, 56472 Hof (DE); Jud, Joachim, 57567 Daaden (DE); Koch, Asmus, 57627 Hachenburg (DE); Roth, Ulrich, 57520 Neunkhausen (DE)
(74) Vertreter: Patentanwälte Gesthuysen, von Rohr, Weidener, Häckel

(56) Entgegenhaltungen:
- WO-A-97/16658
- DE-A- 4 300 178
- US-A- 4 472 162
- US-A- 4 698 049
- US-A- 4 725 260
- PATENT ABSTRACTS OF JAPAN vol. 095, no. 007, 31.August 1995 & JP 07 103296 A (BANDO), 18.April 1995,

## Beschreibung

Die Erfindung betrifft eine Riemenspannvorrichtung mit einem Aufnahmegehäuse, einem mit dem Aufnahmegehäuse schwenkbar verbundenen Rollenträger, einer einen axial federbelasteten Lagerkegel aufweisenden Lagereinrichtung zwischen dem Aufnahmegehäuse und dem Rollenträger und einer zwischen dem Aufnahmegehäuse und dem Rollenträger vorgesehenen, auf Torsion beanspruchten Schraubenfeder zum Aufbringen der Spannkraft, wobei die Schraubenfeder auch zur axialen Belastung des Lagerkegels dient.

In Kraftfahrzeugen werden durch den Fahrzeugmotor verschiedene Hilfsaggregate angetrieben, z. B. die Lichtmaschine, die Pumpe für die Wasserkühlung des Fahrzeugmotors, der Ventilator für die Kühlung des Kühlwassers, die Pumpe für die Servolenkung, der Kompressor für die Klimaanlage usw. Dies geschieht durch eine auf der Motorwelle des Fahrzeugmotors sitzende Hauptriemenscheibe und durch einen endlosen Treibriemen, der einerseits über die Hauptriemenscheibe und andererseits über auf den Antriebswellen der Hilfsaggregate sitzende Hilfsriemenscheiben läuft. Für die Funktionstüchtigkeit der Hilfsaggregate und für die Lebensdauer des Treibriemens ist die Einstellung und die Beibehaltung der Riemenspannung des Treibriemens von besonderer Bedeutung. Zu diesem Zweck werden Riemenspannvorrichtungen verwendet.

Eine Riemenspannvorrichtung der eingangs genannten Art geht bereits aus der US - A - 4,472,162 hervor. Als Lager- und Dämpfungskegel sind eine zylindrische Hülse und ein sich an die zylindrische Hülse anschließendes kegelstumpfförmiges Teil aus elastischem Material vorgesehen. Die gesamte Baueinheit wird über eine Schraubverbindung zusammengehalten. Hierzu dient ein entsprechender Schraubbolzen, der durch eine im Gehäuse der Riemenspannvorrichtung vorgesehene Durchgangsöffnung hindurchgeführt ist und im Motorraum verschraubt wird. Nachteilig bei diesem Stand der Technik ist es, daß die Einzelteile der bekannten Riemenspannvorrichtung bei der Montage leicht auseinanderfallen können, zumal die Montage im Motorraum häufig schwierig ist, da nur wenig Raum zur Verfügung steht. Die bekannte Riemenspannvorrichtung besteht im übrigen nicht zuletzt aufgrund der erforderlichen Schraubverbindungsmittel aus vergleichsweise vielen Bauteilen und ist aufwendig aufgebau. Als Folge hiervon ergeben sich vergleichsweise hohe Herstellungskosten.

Aus der DE - C - 43 00 178 ist bereits eine Riemenspannvorrichtung bekannt, die einen aus drei Druckstücken bestehenden Lagerkonus aufweist, über den ein Dämpfungskegel gestülpt ist. Auf den Dämpfungskegel ist wiederum ein Rollenträger aufgesetzt. Der dreiteilige Lagerkegel wird über eine Druckfeder gegen den Dämpfungskegel gedrückt, so daß sich über die gesamte Lebensdauer der Riemenspannvorrichtung eine spielfreie Lagerung des Rollenträgers im Aufnahmegehäuse ergibt. Das Aufnahmegehäuse und der Rollenträger sind über eine Schraubverbindung axial gesichert. Diesem Zweck dient eine einen Sechskantbereich aufweisende Achse, die einerseits mit dem Aufnahmegehäuse verbunden und in die andererseits eine Schraube zur axialen Abstützung und Lagerung des Rollenträgers einschraubbar ist. Der Sechskantbereich der Achse dient im übrigen als Anlage der drei Druckstücke des Lagerkegels. Zum Aufbringen der Spannkraft dient eine auf Torsion beanspruchte Schraubenfeder, deren Enden jeweils abgebogen sind.

Aus der US - A - 4,698,045 geht eine Riemenspannvorrichtung hervor, bei der die Lagereinrichtung einen zwischen dem Aufnahmegehäuse und dem Rollenträger befindlichen Lagerkegel aufweist. Des weiteren ist eine auf Torsion beanspruchte Schraubenfeder zum Aufbringen der Spannkraft vorgesehen. Im übrigen dient die auf Druck belastete Schraubenfeder auch zur axialen Belastung einer Dämpfungseinrichtung.

Aus der DE - C - 43 25 424 ist eine Riemenspannvorrichtung bekannt, bei der zum Aufbringen der Spannkraft eine auf Torsion beanspruchte Schraubenfeder vorgesehen ist. Die Schraubenfeder ist auf Druck beansprucht und drückt gegen eine einen Reibkörper und einen Gegenreibring aufweisende Dämpfungsanordnung. Als Lagereinrichtung dient bei dieser bekannten Riemenspannvorrichtung ein Radiallager. Das Radiallager ist nicht federbelastet und auch nicht nachstellbar. Vergleichbare Riemenspannvorrichtungen sind aus der DE - A - 41 24 636 und der DE - A - 43 36 467 bekannt.

Aufgabe der Erfindung ist es, eine Riemenspannvorrichtung der eingangs genannten Art zur Verfügung zu stellen, die einfach aufgebaut und kostengünstig herstellbar ist.

Zur Lösung der zuvor angegebenen Aufgabe ist bei der eingangs genannten Riemenspannvorrichtung erfindungsgemäß vorgesehen, daß die Schraubenfeder weiterhin eine Zugwirkung zwischen dem Aufnahmegehäuse und dem Rollenträger erzeugt. Durch die erfindungsgemäße Ausgestaltung ergibt sich eine erhebliche Vereinfachung und Verringerung der erforderlichen Bauteile. Die bei der erfindungsgemäßen Riemenspannvorrichtung vorgesehene Schraubenfeder erfüllt eine Dreifachfunktion, nämlich in ihrer Wirkung der gefederten Schwenkbewegung, der axialen Belastung des Lagerkegels und ihre Befestigungsfunktion durch Zugwirkung zwischen dem Aufnahmegehäuse und dem Rollenträger. Im übrigen ergibt sich durch die Erfindung eine vormontierte Baueinheit, die sich in einfacher Weise im Motorraum montieren läßt, ohne daß die Gefahr eines Auseinanderfallens der Riemenspannvorrichtung besteht.

Zur Kopplung der Schraubenfeder mit dem Aufnahmegehäuse und dem Rollenträger bietet es sich an, in den beiden zuvor genannten Bauteilen jeweils einen schraubengangförmig ausgebildeten Aufnahmegang mit einer entsprechenden Einführöffnung für die jeweiligen Endwindungen des Federelements vorzusehen. Damit die Schraubenfeder die Spannkraft entsprechend übertragen kann, versteht es sich, daß die Aufnahmegänge jeweils an einem Anschlag enden.

Die zuvor genannte Ausführungsform mit Aufnahmegängen zur Realisierung der Verbindung zwischen dem Aufnahmegehäuse bzw. dem Rollenträger und der Schraubenfeder läßt sich, ohne daß besondere Biegevorgänge bei der Herstellung der Schraubenfeder erforderlich wären, dadurch in besonders einfacher Weise verwirklichen, daß der Abstand der Endwindungen zur benachbarten Windung größer ist als der Abstand benachbarter Windungen zueinander. Mit anderen Worten ausgedrückt bedeutet dies, daß die Endwindungen zu der jeweiligen benachbarten Windung nicht parallel, vielmehr in einem spitzen Winkel dazu angeordnet sind.

Die erfindungsgemäße Riemenspannvorrichtung läßt sich besonders kostengünstig dadurch herstellen, daß das Aufnahmegehäuse und der Rollenträger als Druckgußteile ausgebildet sind. Um den zuvor erwähnten Aufnahmegang im Aufnahmegehäuse und im Rollenträger in einfacher Weise beim Gießen ausbilden zu können, sind über die Länge des Aufnahmeganges verteilt eine Mehrzahl von inneren und äußeren Öffnungen vorgesehen. Benachbarte Öffnungen sind dabei über einen Steg voneinander beabstandet. Eine besonders einfache Ausformung des jeweiligen Aufnahmeganges läßt sich dabei dann erzielen, wenn die äußeren Stege versetzt zu den inneren Stegen angeordnet sind. Es versteht sich, daß die vorgenannte Ausgestaltung sowohl am Aufnahmegehäuse als auch am Rollenträger verwirklicht sein kann.

Eine weitere Vereinfachung des Aufbaus der Riemenspannvorrichtung ergibt sich dadurch, daß die Lagereinrichtung nur noch aus einer Kegelöffnung, die vorzugsweise im Aufnahmegehäuse vorgesehen ist, einem separaten Lagerkegel und einem kegeligen Zapfen am Rollenträger besteht, auf den der Lagerkegel aufgesetzt ist.

Der Lagerkegel ist zweckmäßigerweise aus flexiblem Kunststoff hergestellt und weist dabei zumindest einen durchgehenden Längsschlitz und gegebenenfalls eine Mehrzahl weiterer nicht durchgehender Schlitze auf. Durch diese besondere Materialwahl und Ausgestaltung des Lagerkegels ist gewährleistet, daß sich dieser zur axialen und radialen Lagerung immer optimal an die Kegelöffnung bzw. den Zapfen anpaßt. Auch etwaige Fertigungstoleranzen an der Kegelöffnung, dem Zapfen oder gar an dem Lagerkegel selbst lassen sich durch die gewählte Formgebung ohne weiteres ausgleichen.

Nachfolgend werden Ausführungsbeispiele der Erfindung anhand der Zeichnung erläutert. Dabei zeigt
- Fig. 1: eine schematische Explosionsdarstellung der erfindungsgemäßen Riemenspannvorrichtung unter Weglassung verschiedener Details,
- Fig. 2: eine Querschnittsansicht der erfindungsgemäßen Riemenspannvorrichtung,
- Fig. 3: eine Unteransicht der Riemenspannvorrichtung aus Fig. 2 in Pfeilrichtung III aus Fig. 2 gesehen,
- Fig. 4: eine vergrößerte, perspektivische Ansicht eines Details aus Fig. 3,
- Fig. 5: eine Draufsicht auf die Riemenspannvorrichtung aus Fig. 2 in Pfeilrichtung V aus Fig. 2 gesehen,
- Fig. 6: eine vergrößerte, perspektivische Ansicht eines Details aus Fig. 5 und
- Fig. 7: eine Querschnittsansicht einer Lagereinrichtung der erfindungsgemäßen Riemenspannvorrichtung.

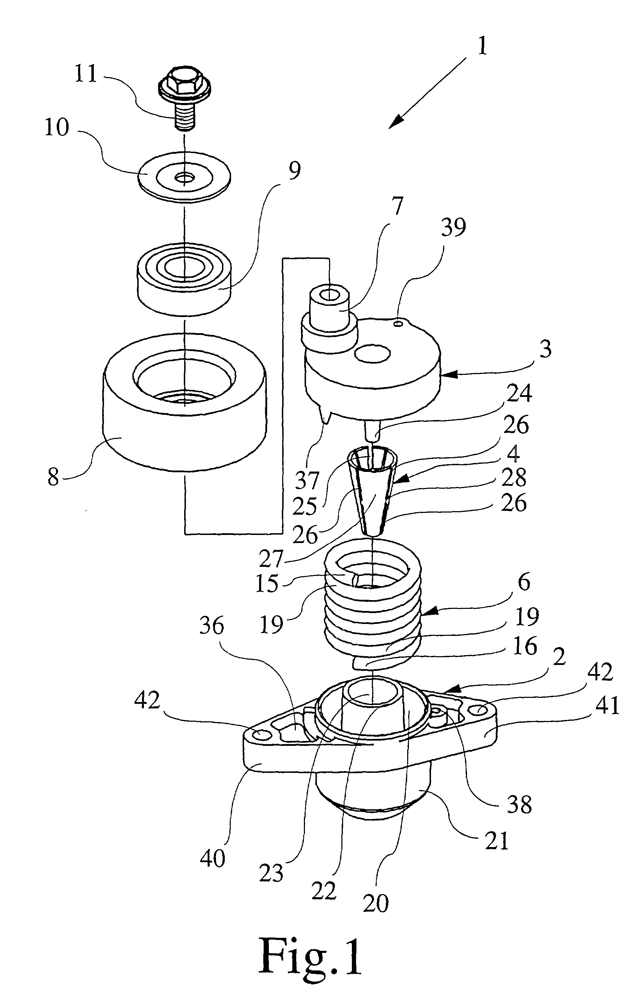

Die in den Figuren dargestellte Riemenspannvorrichtung 1 weist, wie dies insbesondere aus Fig. 1 ersichtlich ist, als Hauptbestandteile ein Aufnahmegehäuse 2, einen Rollenträger 3, eine einen Lagerkegel 4 aufweisende Lagereinrichtung 5 und eine auf Torsion beanspruchte Schraubenfeder 6 zum Aufbringen der Spannkraft der Riemenspannvorrichtung 1 auf. Darüber hinaus ist am Rollenträger ein Lagervorsprung 7 zur Anordnung einer Laufrolle 8, eines Lagers 9, insbesondere eines Wälzlagers, einer Dichtscheibe 10 und einer Schraube 11 vorgesehen.

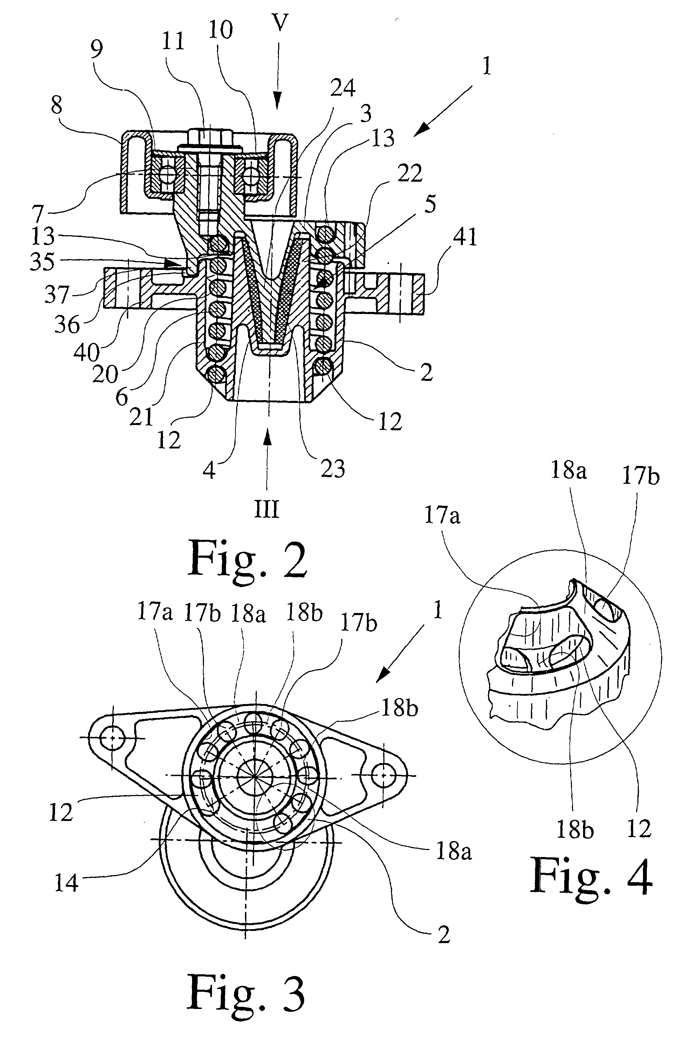

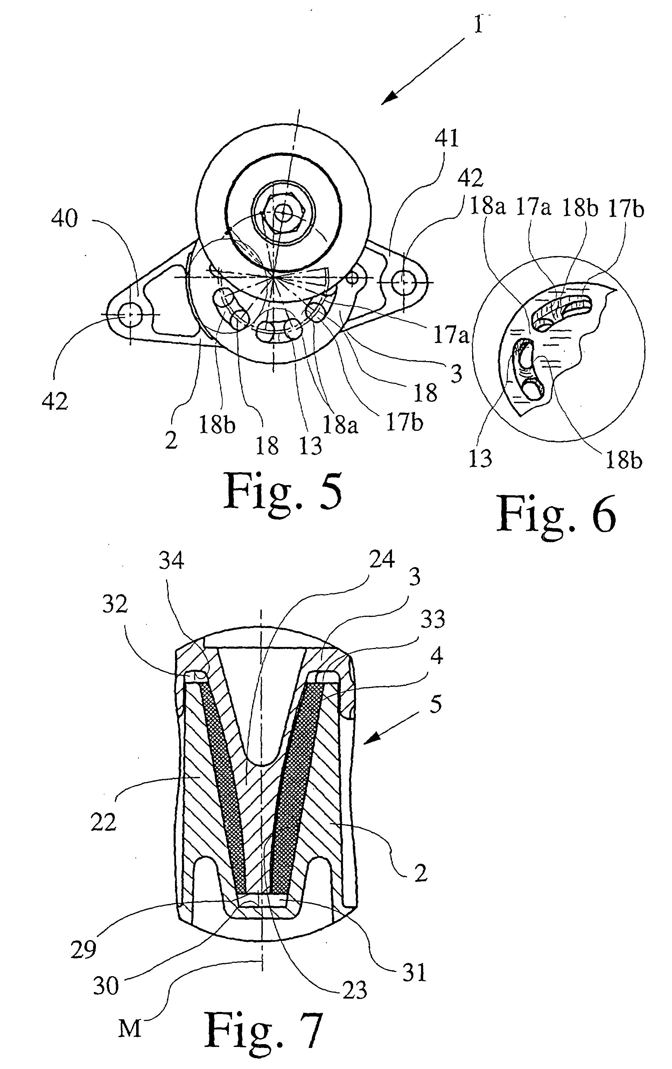

Wesentlich ist nun, daß die Schraubenfeder 6 nicht nur zum Aufbringen der Spannkraft dient sondern auch zur axialen Federbelastung der Lagereinrichtung 5. Außerdem übt die Schraubenfeder 6 weiterhin eine Zugwirkung zwischen dem Aufnahmegehäuse 2 und dem Rollenträger 3 aus. Die Schraubenfeder 6 hat damit eine Dreifachfunktion. Die Verbindung der Schraubenfeder 6 mit dem Aufnahmegehäuse 2 und dem Rollenträger 3 erfolgt derart, daß im Aufnahmegehäuse 2 ein Aufnahmegang 12 vorgesehen ist, während im Rollenträger 3 ein entsprechender Aufnahmegang 13 vorhanden ist. Jeder der Aufnahmegänge 12, 13 endet an einem Anschlag 14. In Fig. 3 ist der Anschlag 14 des Aufnahmeganges 12 im Aufnahmegehäuse 2 dargestellt. Jeder der Aufnahmegänge 12, 13 ist über eine nicht dargestellte Einführöffnung für die betreffende Endwindung 15, 16 der Schraubenfeder 6 zugänglich. In jeden der Aufnahmegänge 12, 13 münden unterseitig und oberseitig eine Mehrzahl von Öffnungen 17a, b. Die Öffnungen 17a, b sind jeweils als Langlöcher ausgebildet, wobei benachbarte Öffnungen 17a, b über einen Steg 18a, 18b voneinander beabstandet sind. Dabei sind die im jeweiligen Aufnahmegang 12, 13 vorgesehenen äußeren Stege 18a zwischen den äußeren Öffnungen 18a angeordnet, während die inneren Stege 18b zwischen den inneren Öffnungen 17b angeordnet sind. Dies geht insbesondere aus den Fig. 4 und 6 gut hervor.

In Fig. 1 ist eine Ausführungsform der Schraubenfeder 6 dargestellt, bei der die Endwindungen 15, 16 zur benachbarten Windung 19 den gleichen Abstand haben wie benachbarte Windungen 19 zueinander. Um das Einführen der Endwindungen 15, 16 in die Aufnahmegänge 12, 13 zu erleichtern, ist es aber von besonderem Vorteil, wenn die Endwindungen 15, 16 nicht parallel, vielmehr in einem sehr spitzen Winkel zu den benachbarten Windungen 19 angeordnet sind. Hierdurch stehen die Endwindungen 15, 16 von ihren benachbarten Windungen 19 ab und können daher in einfacher Weise in die Aufnahmegänge 12, 13 eingeführt werden.

Bei der dargestellten Ausführungsform ist die Schraubenfeder 6 im zusammengebauten Zustand auf Zug beansprucht, d.h. es übt eine Zugwirkung auf das Aufnahmegehäuse 2 und den Rollenträger 3 aus. Die Lagereinrichtung 5 ist dabei derart ausgelegt, daß durch die Zugfederbelastung ein selbsttätiger Nachstelleffekt für die spielfreie axiale und radiale Lagerung erreicht wird. Durch die Zugfederwirkung der Schraubenfeder 6 ergibt sich neben dem Aufbringen der Spannkraft und der Federbelastung der Lagereinrichtung 5 noch die zuvor bereits erwähnte weitere Funktion des Aufeinanderzuziehens des Aufnahmegehäuses 2 und des Rollenträgers 3, so daß zusätzliche Befestigungsmittel zur Verbindung des Aufnahmegehäuses 2 und des Rollenträgers 3 nicht erforderlich sind.

Die Schraubenfeder 6 selbst ist in einem nach oben hin offenen Ringraum 20 im Aufnahmegehäuse 2 angeordnet, der stirnseitig in den Aufnahmegang 12 übergeht. Im übrigen gehen von der Stirnseite des Ringraums 20 auch die inneren Öffnungen 17b aus. Seitlich nach außen hin wird der Ringraum 20 von einer Außenwandung 21 begrenzt, während er nach innen hin von einem hochstehenden Vorsprung 22 begrenzt wird, um den herum die Schraubenfeder 6 angeordnet ist. Im Vorsprung 22 befindet sich eine Kegelöffnung 23, die Teil der Lagereinrichtung 5 ist.

Zur Lagereinrichtung 5 gehört weiterhin der bereits erwähnte Lagerkegel 4 und ein kegeliger Zapfen 24, der einteilig mit dem Rollenträger 3 ausgebildet ist und in die Kegelöffnung 23 hineinragt. Der Lagerkegel 4 selbst ist hülsenförmig, d.h. als Kegelhülse, ausgebildet. Dabei korrespondiert die Außenfläche des Lagerkegels 4 im wesentlichen mit der Fläche der Kegelöffnung, während die Innenfläche des Lagerkegels 4 im wesentlichen mit der Außenfläche bzw. der Form des Zapfens 24 korrespondiert.

Obwohl der Lagerkegel 4 und auch der Zapfen 24 grundsätzlich rotationssymmetrisch ausgebildet sein können, ist in der gezeigten Ausführungsform eine nicht rotationssymmetrische Ausgestaltung des Zapfens 24 und auch des Lagerkegels 4 dargestellt (siehe insbesondere Fig. 7). In der dargestellten Ausführungsform ist die Dicke des hülsenförmigen Lagerkegels 4 bezogen auf die Mittelachse M auf der einen Seite größer als auf der anderen Seite. Mit anderen Worten bedeutet dies, daß die Materialstärke des Lagerkegels 4 über den Umfang verteilt unterschiedlich ist. Dementsprechend ist der Zapfen 24 auf der einen Seite schwächer als auf der anderen Seite. Darüber hinaus hat der Lagerkegel 4 im Querschnitt eine bauchige Form, an die die Form des Zapfens 24 angepaßt ist. Durch diese besondere Ausgestaltung ergeben sich gute Lagerungsverhältnisse und auch ein Ausgleich von Fertigungstoleranzen.

Der hülsenförmige Lagerkegel 4 selbst besteht aus einem flexiblen Kunststoff und ist, wie insbesondere aus Fig. 1 erkennbar ist, einerseits mit einem durchgehenden Längsschlitz 25 versehen, andererseits mit einer Reihe von weiteren Schlitzen 26. Die weiteren Schlitze 26 sind so angeordnet, daß sich eine Mehrzahl von beispielsweise vier Hülsensegmente 27 ergeben, wobei benachbarte Hülsensegmente 27 über einen zwischen den weiteren Schlitzen 26 verbleibenden Steg 28 miteinander verbunden sind. Dies gilt natürlich nicht im Bereich des Längsschlitzes 25.

Im eingebauten Zustand befindet sich zwischen dem äußeren Ende 29 des Zapfens 24 und der unteren Stirnfläche 30 der Kegelöffnung 23 ein Freiraum 31, während ein entsprechender freier Ringraum 32 zwischen der oberen Randfläche 33 des Vorsprungs 22 und der unteren Fläche 34 am Rollenträger 3 verbleibt. Hierdurch ist ohne weiteres ein selbsttätiges Nachstellen in axialer Richtung, bedingt durch die Schraubenfeder 6, bei Verschleiß des Lagerkegels 4 möglich.

Zwischen dem Aufnahmegehäuse 2 und dem Rollenträger 3 ist eine Schwenkwegbegrenzungseinrichtung 35 vorgesehen. Diese weist vorliegend eine Führungsnut 36 am Aufnahmegehäuse 2 und einen in die Führungsnut 36 eingreifenden Vorsprung 37 am Rollenträger 3 auf. Im eingesetzten Zustand läßt sich durch die Schwenkwegbegrenzungseinrichtung 35 der maximal mögliche Spannweg begrenzen und damit ein Überspannen der Schraubenfeder 6 vermeiden.

Weiterhin sind im Aufnahmegehäuse 2 und im Rollenträger 3 jeweils miteinander korrespondierende Öffnungen 38, 39 vorgesehen. Die Öffnungen 38, 39 kommen dann zur Deckung, wenn der Rollenträger 3 gegenüber dem Aufnahmegehäuse 2 so weit gegen die Federkraft der Schraubenfeder 6 bewegt wird, wie dies durch die Schwenkwegbegrenzungseinrichtung 35 maximal möglich ist. Dann ist ein optimaler vorgespannter Zustand erreicht. Durch Einstecken eines nicht dargestellten Stiftes in die Öffnung 38, 39 läßt sich die Riemenspannvorrichtung 1 in diesem vorgespannten Zustand arretieren.

Besonders kostengünstig lassen sich das Aufnahmegehäuse 2 und der Rollenträger 3 als Druckgußteile herstellen. Die dabei ggf. auftretenden Fertigungstoleranzen lassen sich ohne weiteres durch den besonderen Lagerkegel 4 ausgleichen.

Zur Befestigung im Motorraum sind schließlich am Aufnahmegehäuse 2 zwei Befestigungslaschen 40, 41 mit jeweils einer entsprechenden Öffnung 42 vorgesehen.

Die erfindungsgemäße Riemenspannvorrichtung 1 wirkt nun derart, daß von der Schraubenfeder 6 ein Drehmoment erzeugt wird, das auf den Rollenträger 3 übertragen wird. Hierdurch wird im nicht dargestellten Treibriemen eine Trumkraft erzeugt, die wiederum einen Kraftschluß zwischen Treibriemen und den weiteren Riemenscheiben bzw. der Laufrolle 8 bewirkt, so daß der Treibriemen auf den entsprechenden Riemenscheiben bzw. Laufrollen schlupffrei läuft. Etwaige Schwingungen im Treibriemen werden von diesem auf die Laufrolle 8 und den Rollenträger 3 in die Schraubenfeder 6 eingeleitet und von diesem gedämpft.

## Patentansprüche

1. Riemenspannvorrichtung (1) mit einem Aufnahmegehäuse (2), einem mit dem Aufnahmegehäuse (2) schwenkbar verbundenen Rollenträger (3), einer einen axial federbelasteten Lagerkegel (4) aufweisenden Lagereinrichtung (5) zwischen dem Aufnahmegehäuse (2) und dem Rollenträger (3) und einer zwischen dem Aufnahmegehäuse (2) und dem Rollenträger (3) vorgesehenen, auf Torsion beanspruchten Schraubenfeder zum Aufbringen der Spannkraft, wobei die Schraubenfeder (6) auch zur axialen Belastung des Lagerkegels (4) dient, **dadurch gekennzeichnet, daß** die Schraubenfeder (6) weiterhin eine Zugwirkung zwischen dem Aufnahmegehäuse (2) und dem Rollenträger (3) erzeugt.

2. Riemenspannvorrichtung nach Anspruch 1, **dadurch gekennzeichnet, daß** im Aufnahmegehäuse (2) und/oder im Rollenträger (3) ein an einem Anschlag (14) endender Aufnahmegang (12, 13) mit einer ersten Einführöffnung für die betreffende Endwindung (15, 16) der Schraubenfeder (6) vorgesehen ist.

3. Riemenspannvorrichtung nach Anspruch 2, **dadurch gekennzeichnet, daß** der Abstand der Endwindung (15, 16) zur benachbarten Windung (19) größer ist als der Abstand benachbarter Windungen (19) zueinander.

4. Riemenspannvorrichtung nach einem der Ansprüche 1 bis 3, **dadurch gekennzeichnet, daß** das Aufnahmegehäuse (2) und/oder der Rollenträger (3) als Druckgußteil ausgebildet sind/ist.

5. Riemenspannvorrichtung nach einem der Ansprüche 2 bis 4, **dadurch gekennzeichnet, daß** über die Länge des Aufnahmeganges (12, 13) verteilt unterseitig und/oder oberseitig eine Mehrzahl von in den Aufnahmegang (12, 13) mündender Öffnungen (17a, b) vorgesehen sind, daß benachbarte Öffnungen (17a, b) über einen Steg (18a, 18b) voneinander getrennt sind und daß die oberseitigen oder äußeren Stege (18a) versetzt zu den unterseitigen oder inneren Stegen (18b) angeordnet sind.

6. Riemenspannvorrichtung nach einem der Ansprüche 1 bis 5, **dadurch gekennzeichnet, daß** der Lagerkegel (4) mit dem Rollenträger (3) verbunden ist und im Aufnahmegehäuse (2) eine zum Lagerkegel (4) korrespondierende Kegelöffnung (23) vorgesehen ist.

7. Riemenspannvorrichtung nach Anspruch 6, **dadurch gekennzeichnet, daß** der Rollenträger (3) einen einteilig mit ihm ausgebildeten kegeligen Zapfen (24) aufweist und der Lagerkegel (4) hülsenförmig zum Aufsetzen auf den Zapfen (24) ausgebildet ist.

8. Riemenspannvorrichtung nach einem der Ansprüche 1 bis 7, **dadurch gekennzeichnet, daß** der Lagerkegel (4) aus flexiblem Kunststoff besteht.

9. Riemenspannvorrichtung nach einem der Ansprüche 1 bis 8, **dadurch gekennzeichnet, daß** der Lagerkegel (4) einen durchgehenden Längsschlitz (25) aufweist.

10. Riemenspannvorrichtung nach einem der Ansprüche 1 bis 9, **dadurch gekennzeichnet, daß** am Lagerkegel (4) eine Mehrzahl weiterer nicht durchgehender Schlitze (26) vorgesehen sind.

11. Riemenspannvorrichtung nach einem der Ansprüche 1 bis 10, **dadurch gekennzeichnet, daß** als Schwenkwegbegrenzungseinrichtung (35) zwischen dem Aufnahmegehäuse (2) und dem Rollenträger (3) im Aufnahmegehäuse (2) eine Führungsnut (36) und am Rollenträger (3) ein in die Führungsnut (36) eingreifender Vorsprung (37) vorgesehen sind.

12. Riemenspannvorrichtung nach einem der Ansprüche 1 bis 11, **dadurch gekennzeichnet, daß** im Aufnahmegehäuse (2) und im Rollenträger (3) jeweils miteinander korrespondierende Öffnungen (38, 39) zum Einstecken eines Arretierstiftes zum Halten der Riemenspannvorrichtung (1) im vorgespannten Zustand vorgesehen sind.

## Claims

1. Belt tensioning device (1) having a receiver housing (2), a pulley carrier (3) swingingly connected to the receiver housing (2), a bearing means (5) having a bearing cone (4) that is axially biased by a spring and located between the receiver housing (2) and the pulley carrier (3), and a torsionally biased helical spring (6) for applying tensioning force, wherein the helical spring (6) also axially biases the bearing cone (4) **characterized in that** the helical spring (6) further creates a pulling action between the receiver housing (2) and the pulley carrier (3).

2. Belt tensioning device according to claim 1, **characterized in that** a receiving passage (12, 13) ending at a stop (14) having a first insertion opening for a respective end turn (15, 16) of the helical spring (6) is provided in the receiver housing (2) and/or in the pulley carrier (3).

3. Belt tensioning device according to claim 2, **characterized in that** the distance of the end turn (15, 16) to the adjacent turn (19) is larger than the distance of adjacent turns (19) to one another.

4. Belt tensioning device according to any one of claims 1 to 3, **characterized in that** the receiver housing (2) and/or the pulley carrier (3) is/are of die casting.

5. Belt tensioning device according to any one of claims 2 to 4, **characterized in that** a plurality of openings (17a, b) that discharge into the receiving passage (12, 13) are distributed over the upper and lower sides of the length of the receiving passage (12, 13), that adjacent openings (17a, b) are separated from one another by a rib (18a, 18b) and that the upper or outer ribs (18a) are offset relative to the lower or inner ribs (18b).

6. Belt tensioning device according to any one of claims 1 to 5, **characterized in that** the bearing cone (4) is connected with the pulley carrier (3) and a conical opening (23) corresponding to the bearing cone (4) is provided in the receiver housing (2).

7. Belt tensioning device according to claim 6, **characterized in that** the pulley carrier (3) has an integrally formed conical journal (24) and wherein the bearing cone (4) is sleeve-shaped for seating on the journal (24).

8. Belt tensioning device according to any one of claims 1 to 7, **characterized in that** the bearing cone (4) is made of flexible plastic.

9. Belt tensioning device according to any one of claims 1 to 8, **characterized in that** the bearing cone (4) is split by a continuous longitudinal slot (25).

10. Belt tensioning device according to any one of claims 1 to 9, **characterized in that** a plurality of additional slots (26) that are not continuous are provided on the bearing cone (4).

11. Belt tensioning device according to any one of claims 1 to 10, **characterized in that** a pivot path limit means (35) between the receiver housing (2) and the pulley carrier (3) comprises a guide groove (36) provided in the receiver housing (2) and a projection (37) on the pulley carrier (3) which extends into the guide groove (36).

12. Belt tensioning device according to any one of claims 1 to 11, **characterized in that** openings (38, 39), each corresponding with one another for insertion of a locking pin for holding the belt tensioning device (1) in a pre-stressed state, are provided in the receiver housing (2) and in the pulley carrier (3).

## Revendications

1. Dispositif de tension de courroie (1) avec un carter d'admission (2), un porte-rouleau (3) pivotant par rapport au carter d'admission (2), une installation à paliers (5) comportant un cône de palier sollicité axialement par ressort (4) entre le carter d'admission (2) et le porte-rouleau (3) et un ressort à vis installé entre le carter d'admission (2) et le porte-rouleau (3) et sollicité par torsion pour l'application de la force de tension, alors que ce ressort à vis (6) sert aussi à la sollicitation axiale du cône de palier (4), **caractérisé en ce que** le ressort à vis (6) continue à produire un effet de traction entre le carter d'admission (2) et le porte-rouleau (3).

2. Dispositif de tension de courroie selon la revendication (1), **caractérisé en ce que** un passage d'admission (12, 13) se terminant à une butée (14) est prévu dans le carter d'admission (2) et/ou le porte-rouleau (3), avec un première orifice d'introduction pour la spire finale concernée (15, 16) du ressort à vis (6).

3. Dispositif de tension de courroie selon la revendication 2, **caractérisé en ce que** l'écart entre la spire finale (15, 16) et la spire voisine (19) est plus grand que l'écart des spires voisines (19) entre elles.

4. Dispositif de tension de courroie selon une des revendications 1 à 3, **caractérisé en ce que** le carter d'admission (2) et/ou le porte-rouleau (3) sont conçus sous forme d'une pièce coulée sous pression.

5. Dispositif de tension de courroie selon une des revendications 2 à 4, **caractérisé en ce que**, sur la longueur du passage d'admission (12, 13), sont prévus, répartis du côté inférieur et/ou inférieur, plusieurs ouvertures (17a, b) débouchant dans le passage d'admission (12, 13), que les ouvertures voisines (17a, b) sont séparées l'une de l'autre par une traverse (18a, 18b) et que les traverses supérieures ou extérieures (18a) sont décalées par rapport aux traverses inférieures ou intérieures (18b).

6. Dispositif de tension de courroie selon une des revendications 2 à 5, **caractérisé en ce que** le cône de palier (4) est relié au porte-rouleau (3) et que dans le boîtier d'admission (2), une ouverture conique (23) correspondant au cône de palier (4) est prévue.

7. Dispositif de tension de courroie selon la revendication 6, **caractérisé en ce que** le porte-rouleau (3) présente une cheville conique (24) formant avec lui une pièce unique et que le cône à palier (4) est conçu sous forme d'une douille à poser sur la cheville (24).

8. Dispositif de tension de courroie selon une des revendications 1 à 7, **caractérisé en ce que** le cône de palier (4) est en plastique souple.

9. Dispositif de tension de courroie selon une des revendications 1 à 8, **caractérisé en ce que** le cône de palier (4) présente une fente longitudinale continue (25).

10. Dispositif de tension de courroie selon une des revendications 1 à 9, **caractérisé en ce que** sur le cône de palier (4) plusieurs fentes supplémentaires non continues (26) sont prévues.

11. Dispositif de tension de courroie selon une des revendications 1 à 10, **caractérisé en ce que** sont prévues, en tant que dispositif de limitation de l'amplitude des oscillations (35) entre le carter d'admission (2) et le porte-rouleau (3) dans le boîtier d'admission (2) une rainure de guidage (36) et sur le porte-rouleau (3) une proéminence (37) mordant sur la rainure de guidage (36).

12. Dispositif de tension de courroie selon une des revendications 1 à 11, **caractérisée en ce que** sont prévues, dans le carter d'admission (2) et dans le porte-rouleau (3) des ouvertures se correspondant mutuellement (38, 39) pour l'introduction d'une tige d'arrêt pour maintenir le dispositif de tension de courroie (1) à l'état pré-contraint.
